# EUROPEAN PATENT SPECIFICATION

(11) **EP 2 409 909 B1**
(45) Date of publication and mention of the grant of the patent: **14.11.2012**
(21) Application number: 10169987.4
(22) Date of filing: 19.07.2010
(51) Int. Cl.: B62M 6/50, G01L 3/14

(54) **Moment and magnet detecting equipment for an electric bicycle**
Drehmoment- und Magneterkennungsausrüstung für ein elektrisches Fahrrad
Équipement de détection de moment et d'aimant pour bicyclette électrique

(43) Date of publication of application: 25.01.2012
(73) Proprietor: Techway Industrial, Co., Ltd., Chinese Taipei (TW)
(72) Inventor: Huang, San-I, Taichung (TW); Chen, Hong-Fang, Taichung (TW); Fang, Sen-Hsien, Taichung (TW); Lin, Cheng-Yuan, Taichung (TW)
(74) Representative: Becker Kurig Straus

(56) References cited:
- EP-A1- 0 935 128
- EP-A2- 0 965 828
- DE-C1- 19 617 959

## Description

### 1. Field of the Invention

The present invention relates to a moment and magnet detecting equipment of an electric bicycle, and more particularly to a moment and magnet detecting equipment of an electric bicycle having magnetic sensors to detect the driving moment and adjust an exporting power of a motor of the electric bicycle.

### 2. Description of Related Art

A conventional moment and magnet detecting equipment of an electric bicycle is set in a bottom bracket of a bicycle and has two Hall effect sensors, two magnetic plates, a controller, a motor and other complex components. The Hall effect sensors detect the magnetic plates and gain a driving moment data of a crank of the bicycle. According to the driving moment data, a controller of the moment and magnet detecting equipment of an electric bicycle adjusts an outputting power from a motor of the bicycle to support of the user.

However, the components of the conventional moment and magnet detecting of an electric bicycle are complex and not easy to set in the bottom bracket. Furthermore, the bottom bracket of a normal frame of the electric bicycle can not contain the moment and magnet detecting equipment of an electric bicycle and need to be refitted. The refitting process of the bicycle is difficult, complex and not easy.

To overcome the shortcomings, the present invention tends to provide a moment and magnet detecting equipment of an electric bicycle to mitigate or obviate the aforementioned problems.

EP 0 935 128 A1 is related to an auxiliary powered manpowered vehicle having a torque detector that detects the torque applied to a rotated crank axle in a non-contact manner. The manpowered vehicle includes a main body, a rotated body supported by the main body and driven by manpower, a rotary coil arranged coaxially with the rotated body, a variable impedance device electrically connected to the rotary coil and having its impedance varied in accordance with the load applied to the rotated body

EP 0 965 828 A2 relates to an input torque detecting apparatus for a power assist vehicle, including a first rotator which is rotated in synchronization with rotation of input operating members manually operated for rotating a drive wheel, and a second rotator which is disposed coaxially with the first rotator with an elastic member interposed between the first rotator and the second rotator and which is rotated in synchronization with rotation of the drive wheel, wherein an input torque into the input operating members is detected on the basis of a rotational phase difference produced between the first and second rotators.

The main objective of the present invention is to provide a moment and magnet detecting equipment of an electric bicycle having magnetic sensors to detect the driving moment and adjust an outputting power of a motor of the electric bicycle.

The moment and magnet detecting equipment of an electric bicycle is set between a bottom bracket and a crank of a bicycle and has a transmitting assembly, a driving assembly and a fixing assembly. The transmitting assembly is mounted on a chain wheel and has an outer loop mounted in an inner side of the transmitting assembly. The driving assembly is mounted around and rotated by a rotating shaft of the bicycle connected to the crank and is mounted in and rotates the transmitting assembly and has an inner loop mounted in an inner side of the driving assembly. The fixing assembly is fixed on the bottom bracket and has an outer magnetic sensor and an inner magnetic sensor respectively detecting with the outer magnets and the inner magnets.

Other objects, advantages and novel features of the invention will become more apparent from the following detailed description when taken in junction with the accompanying drawings.

### IN THE DRAWINGS

Fig. 1 is a perspective view of a moment and magnet detecting equipment of an electric bicycle in accordance with the present invention;
Fig. 2 is an exploded perspective of the interacting equipment of the electric bicycle in Fig. 1 showing the outer side;
Fig. 3 is an exploded perspective of the interacting equipment of the electric bicycle in Fig. 1 showing the inner side;
Fig. 4 is a partially exploded perspective view of the interacting equipment of the electric bicycle in Fig. 1 showing the inner side;
Fig. 5 is an enlarged cross sectional side view of the interacting equipment of the electric bicycle in Fig. 1:
Fig. 6 is a side view of the interacting equipment of the electric bicycle in Fig. 1 showing the outer side;
Fig. 7 is a partially exploded side view of the interacting equipment of the electric bicycle in Fig. 1 showing the outer side; and
Fig. 8 is a partially exploded side view of the interacting equipment of the electric bicycle in Fig. 1 showing the operation.

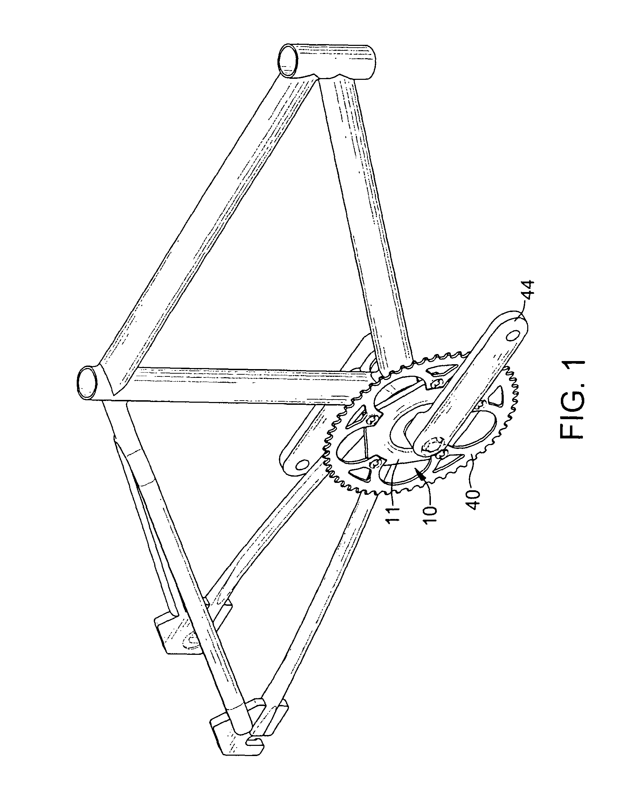

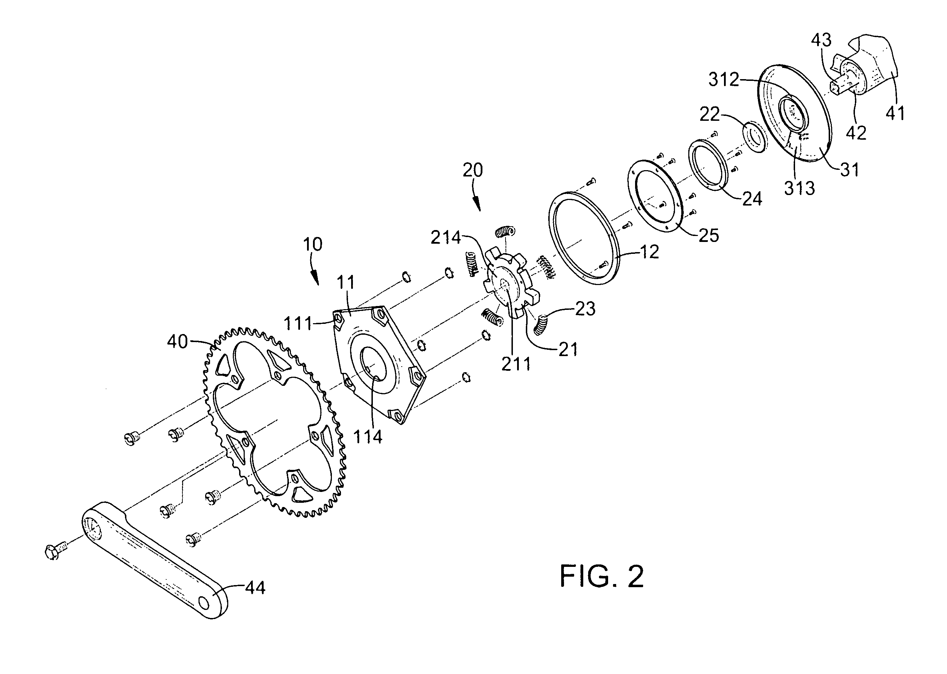

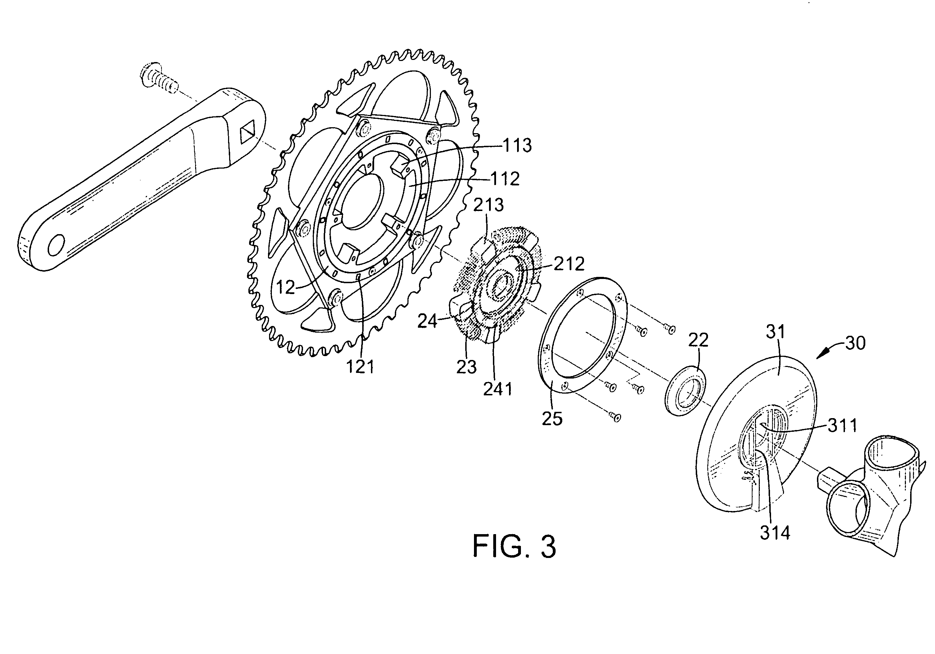

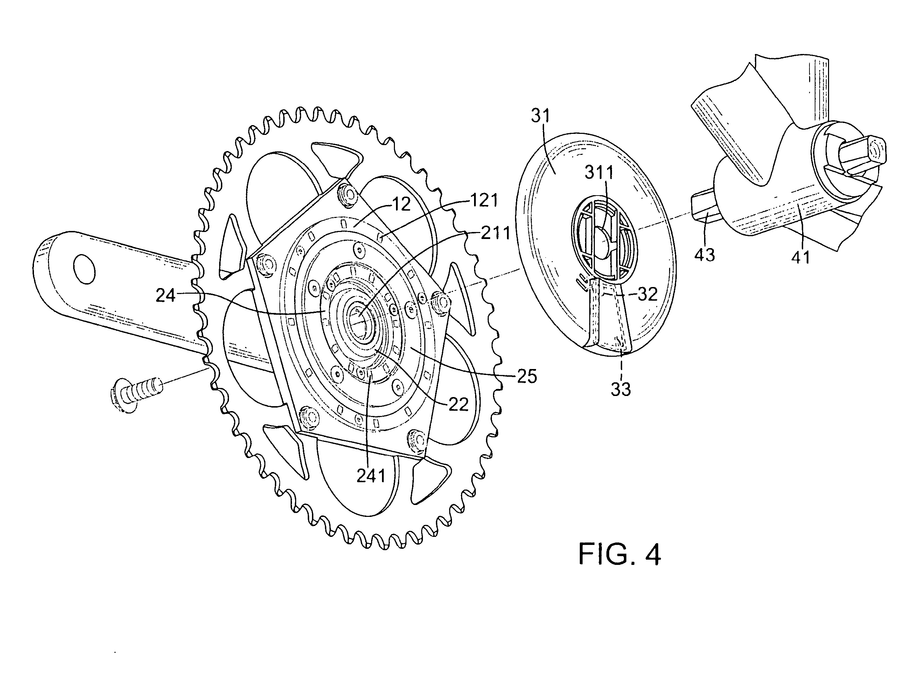

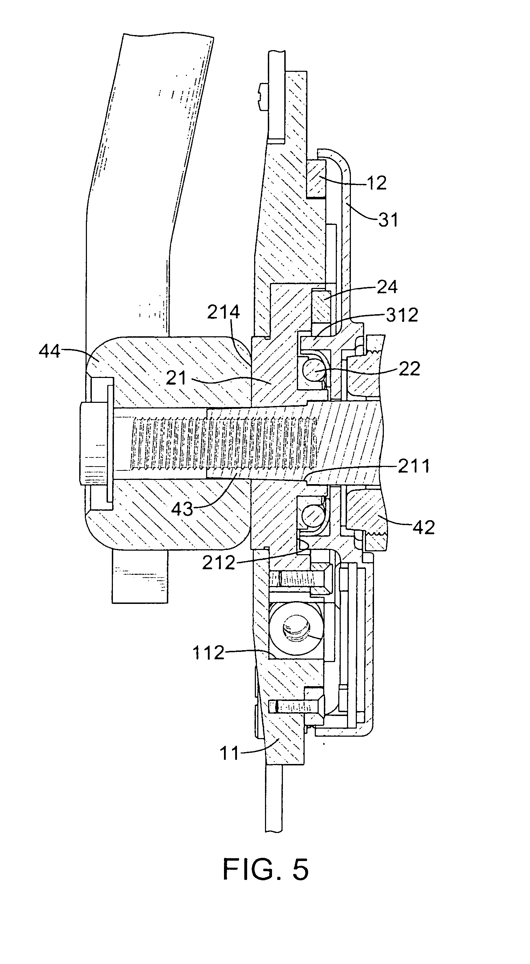

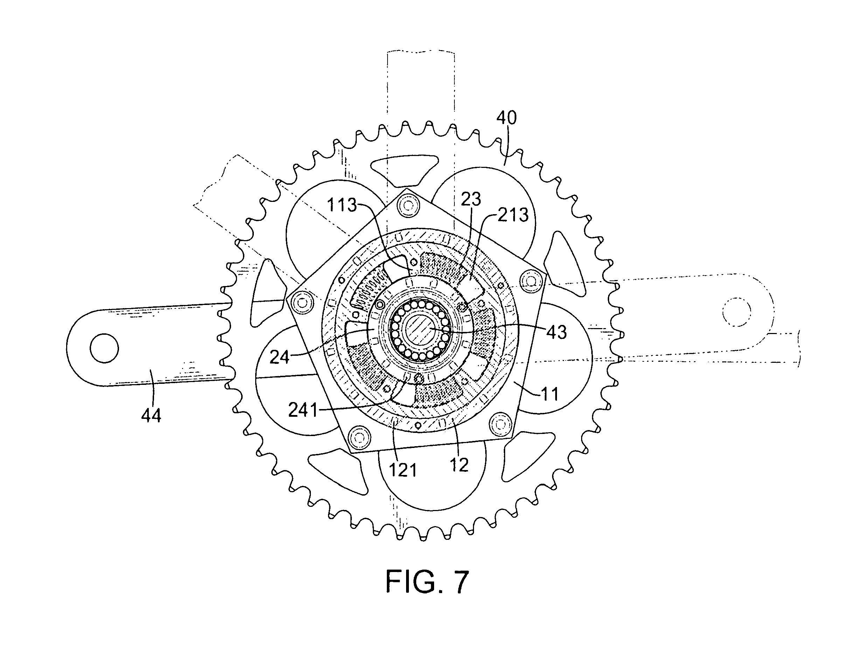

With reference to Figs. 1 to 5 and 7, a moment and magnet detecting equipment of an electric bicycle in accordance with the present invention has a transmitting assembly 10, a driving assembly 20 and a fixing assembly 30.

The transmitting assembly 10 has a transmitting plate 11 and an outer loop 12. The transmitting plate 11 may be quadrilateral, pentagonal, hexagonal or polygonal and has an attaching side, a mounting side, multiple corners, a center, multiple threaded holes 111, a mounting recess 112, multiple transmitting teeth 113 and a center hole 114. In one embodiment of the present invention, the transmitting plate 11 is pentagonal and has five corners, five threaded holes 111 any five transmitting teeth 113 to fit with the pentagonal transmitting plate 11.

The threaded holes 111 are respectively formed through the five corners of the transmitting plate 11 at same intervals and arranged in a circle around the center of the transmitting plate 11. The radiuses of the threaded holes 111 are the same. The mounting recess 112 is circular and formed in the inner side and around the center of the transmitting plate 11.

The transmitting teeth 113 are radially formed on the inner side of the transmitting plate 11 in the mounting recess 112, are located at same intervals and protrude toward the center of the transmitting plate 11, and may be three, four or multiple in the amount. Each transmitting tooth 113 is cubic and has a front side and a rear side opposite to each other. The center hole 114 is circular and formed through the center of the transmitting plate 11 and has an inner diameter.

The outer loop 12 is mounted in the inner side around the center hole 114 of the transmitting plate 11, is arranged between the threaded holes 111 and the mounting recess 112 and is fastened by screws and has multiple outer magnets 121. The outer magnets 121 are mounted around the outer loop 12 at same intervals. The outer magnets 121 are twelve in the embodiment and may be ten or eight.

The driving assembly 20 is mounted in the transmitting plate 11 and has a driving plate 21, a bearing 22, multiple springs 23, an inner loop 24 and a cover loop 25. The driving plate 21 is mounted in the mounting recess 112 surrounded by the transmitting teeth 113 and has an inner side, an outer side, an outer ring edge, a shaft hole 211, a bearing groove 212, multiple driving teeth 213 and a cylinder 214. The shaft hole 211 is rectangular and formed through the driving plate 21 and has an inner diameter shorter than the inner diameter of the center hole 114 of the transmitting plate 11. The bearing groove 212 is formed in the inner side of the driving plate 21 around the shaft hole 211.

The driving teeth 213 are radially formed on and protruding from the outer ring edge of the driving plate 21, are located at same intervals and respectively press against and correspond to the transmitting teeth 113 of the transmitting plate 11. Each driving tooth 213 is cubic and has an abutting side abutting the front side of the corresponded transmitting tooth 113 and a pressing side opposite to the abutting side. The driving teeth 213 may be three, four or multiple in the amount according to the transmitting teeth 113. The cylinder 214 protrudes from the outer surface of the driving plate 21 and rotatably inserted into the center hole 114 of the transmitting plate 11.

The bearing 22 is mounted in the bearing groove 212 of the driving plate 21. The springs 23 are respectively mounted between the transmitting teeth 113 of the transmitting plate 11 and the driving teeth 213 of the driving plate 21 in the mounting recess 112. Each spring 23 has two ends respectively abutting the rear side of one of the transmitting tooth 113 and the spring side of one of the driving teeth 213 next to the transmitting tooth 113. The springs 23 may be four, five, six or multiple according to the amount of the transmitting teeth 113 and the driving teeth 213.

The inner loop 24 is mounted in the inner side of the driving plate 21 and fastened by screws and has twelve outer magnets 241. The outer magnets 241 are mounted around the inner loop 24, are located at same intervals and are respectively aligned to and correspond to the outer magnets 121 of the outer loop 12. The cover loop 25 is mounted on the inner surface of the driving plate 21 and covers and keeps the transmitting teeth 113, the driving teeth 213 and the springs 23 in the mounting recess 112 of the transmitting plate 11. The outer magnets 241 are twelve in the embodiment and may be ten or eight according to and correspond to the inner magnets 121.

The fixing assembly 30 faces the transmitting assembly 10 and the driving assembly 20 and has a fixing plate 31. an outer magnetic sensor 32 and an inner magnetic sensor 33. The fixing plate 31 faces the driving plate 21 and covers the mounting recess 112 and the outer loop 12 and has a covering surface, a fixing surface, a through hole 311, a mounting tube 312. a setting recess 313 and a fixing recess 314.

The covering surface of the fixing plate 31 faces the transmitting assembly 10 and covers the mounting recess 112 and the outer loop 12. The through hole 311 is formed through the fixing plate 31 and communicates with the shaft hole 211 of the driving plate 21. The mounting tube 312 is formed on and protrude from the inner surface of the fixing plate 31 around the through hole 311 and is inserted into the bearing groove 212 to surround and cover the bearing 22. The setting recess 313 is formed in the inner surface of the fixing plate 31. The fixing recess 314 is rectangular and formed in the outer surface of the fixing plate 31 around the through hole 311.

The outer magnetic sensor 32 is mounted in the setting recess 313 and aligned with the inner loop 24 and faces and reacts with the outer magnets 241. The inner magnetic sensor 33 is mounted in the setting recess 313 and aligned with the outer loop 12 and faces and reacts with the inner magnets 121. The outer magnetic sensor 32 and the inner magnetic sensor 33 may be Hall effect sensors.

The moment and magnet detecting equipment of an electric bicycle is mounted on the electric bicycle. The electric bicycle has a chain wheel 40, a bottom bracket 41, two end covers 42, a rotating shaft 43 and crank 44. The bottom bracket 41 is implemented on a frame of the electric bicycle. The end covers 42 are respectively mounted opposite on the bottom bracket 41 and each has a fixing protrusion shaped in cubic. The rotating shaft 43 is rotatably mounted through the bottom bracket 41 and extends out from the end covers 42 and has a connecting end. The chain wheel 40 is connected to the moment and magnet detecting equipment of an electric bicycle and mounted around the connecting end of the rotating shaft 43. The crank 44 has a pivoting end being mounted on the connecting end of the rotating shaft 43.

In assembling, using five screws to insert through the threaded holes 111 of the transmitting plate 11 and screw into the chain wheel 40 to connect the transmitting plate 11 on the chain wheel 40. The connecting end of the rotating shaft 43 is inserted through the through hole 311 of the fixing plate 31, the shaft hole 211 of the driving plate 21 and the center hole 114 of the transmitting plate 11, and connected to the pivoting end of the crank 44. The pivoting end of the crank 44 abuts the cylinder 214 of the driving plate 21. The fixing protrusion of the one of the end covers 42 is mounted into the fixing recess 314 of the fixing plate 31 to fix the fixing assembly 30 from rotating.

Because the moment and magnet detecting equipment of an electric bicycle is set between the bottom bracket 41 and the chain wheel 40 and has simple compositions and may be set easily and conveniently.

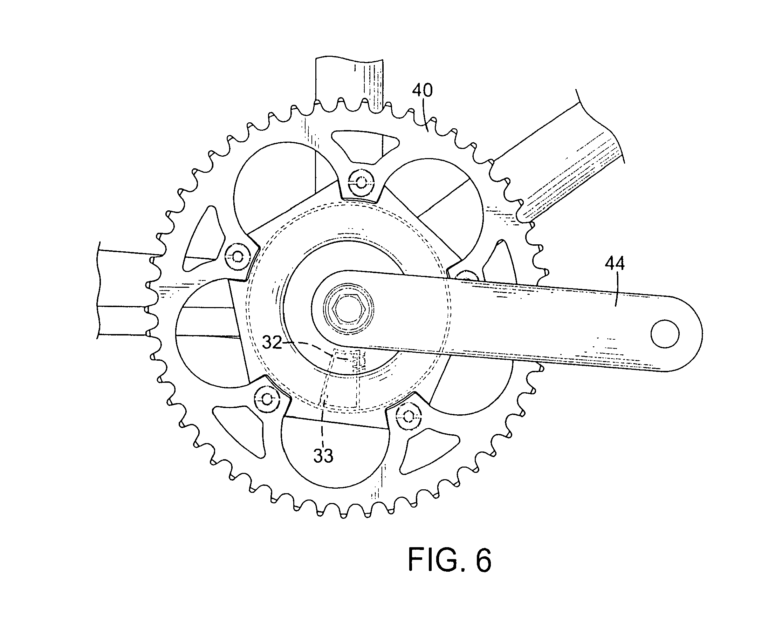

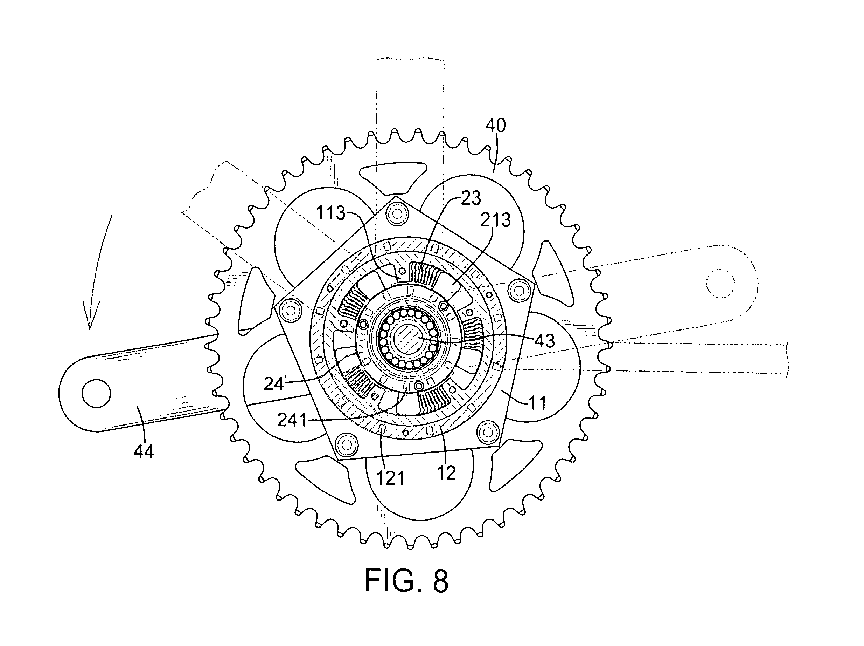

With reference to Figs. 1 and 6 to 8, in use, the user steps the foot pedals of the bicycle to rotate the crank 44 and drive the rotating shaft 43. The rotating shaft 43 is rotated to rotate the driving plate 21. The driving teeth 213 of the driving plate 21 are rotated to press the springs 23 and push the transmitting teeth 113 of the transmitting plate 11 and rotate the transmitting plate 11. Because the transmitting plate 11 is mounted on the chain wheel 40, the chain wheel 40 is driven to rotate and make the electric bicycle working.

When the transmitting assembly 10 and the driving assembly 20 are rotated, the outer loop 12 and the inner loop 24 are driven to rotate with the transmitting assembly 10 and the driving assembly 20. The outer magnets 121 on the outer loop 12 and the outer magnets 241 on the inner loop 24 are respectively passed through the inner magnetic sensor 33 and the outer magnetic sensor 32 and excite potentials.

If the crank 44 is rotated by an increasing driving moment, a rotating moment of the driving teeth 213 of the driving plate 21 will increase accordingly. This indicates that the user is in a strenuous situation. Therefore, the driving plate 21 is rotated faster than the transmitting plate 11. The time of each outer magnets 241passing through the outer magnetic sensor 32 is earlier than the time of the corresponded outer magnet 121passing through the inner magnetic sensor 33. According to the change of the potential between the outer magnetic sensor 32 and the inner magnetic sensor 33, a motor of the electric bicycle is driven to output more power to rotate the chain wheel 40 and make the user relax.

## Claims

1. A moment and magnet detecting equipment for an electric bicycle, comprising a transmitting assembly (10), a driven assembly (20) and a fixing assembly (30) and wherein:
the transmitting assembly (10) has
a transmitting plate (11) having
an attaching side;
a mounting side being opposite to the attaching side;
multiple comers;
a center;
multiple threaded holes (111) respectively formed through the corners of the transmitting plate(11);
a mounting recess (112) formed in the inner side and around the center of the transmitting plate (11);
multiple transmitting teeth (113) radially formed on the inner side of the transmitting plate (11) in the mounting recess (112) and protruding toward the center of the transmitting plate (11); and
a center hole (114) formed through the center of the transmitting plate (11); and
an outer loop (12) mounted in the inner side around the center hole (114) and having multiple outer magnets (121) mounted around the outer loop (12);
the driving assembly (20) is mounted in the transmitting plate (11) and has
a driving plate (21) mounted in the mounting recess (112) and having
an inner side;
an outer side being opposite to the inner side;
an outer ring edge;
a shaft hole (211) formed through the driving plate;
a bearing groove (212) formed in the inner side of the driving plate (21) around the shaft hole (211);
multiple driving teeth (213) radially formed on and protruding from the outer ring edge of the driving plate (21) and respectively corresponding to the transmitting teeth (113);
a bearing (22) mounted in the bearing groove (212) of the driving plate (21);
multiple springs (23) respectively mounted between the corresponded transmitting teeth (113) and the driving teeth (213); and
an inner loop (24) mounted in the inner side of the driving plate (21) and having multiple inner magnets (241) mounted around the inner loop (24);
the fixing assembly (30) faces the transmitting assembly (10) and the driving assembly (20) and has
a fixing plate (31) covering the mounting recess (112) and the outer loop (12) and having
a covering surface facing the transmitting assembly (10);
a fixing surface being opposite to the covering surface;
a through hole (311) formed through the fixing plate (31);
a mounting tube (312) formed on and protruding from the inner surface of the fixing plate (31) around the through hole (311) and inserted into the bearing groove (212) to mount around and cover the bearing (22); and
a fixing recess (314) formed in the outer surface of the fixing plate (31) around the through hole (311); and
an outer magnetic sensor (33) mounted in the covering surface of the fixing plate (31) and aligned with the outer loop (12) and detecting the outer magnets (121); and
an inner magnetic sensor (32) mounted in the covering surface of the fixing plate (31) and aligned with the inner loop (24) and detecting the inner magnets (241).

2. The moment and magnet detecting equipment for an electric bicycle as claimed in claim 1, wherein
each transmitting tooth (113) has a same interval to the adjacent transmitting teeth (113);
the driving teeth (213) are located at same intervals; and
the driving assembly (20) further has a cover loop (25) mounted on the inner surface of the driving plate (21) and covering and keeping the transmitting teeth (113), the driving teeth (213) and the springs (23) in the mounting recess (112) of the transmitting plate (11).

3. The moment and magnet detecting equipment for an electric bicycle as claimed in claim 1 or 2, wherein
the center hole (114) is circular; and
the cylinder (214) protrudes from the outer surface of the driving plate (21) and is rotatably inserted into the center hole (114) of the transmitting plate (11).

4. The moment and magnet detecting equipment for an electric bicycle as claimed in claim 3, wherein the
the outer magnets (121) are according to and correspond to the inner magnets (241) in amount and position.

5. The moment and magnet detecting equipment for an electric bicycle as claimed in claim 4, wherein
the outer magnetic sensor (33) and the inner magnetic sensor (32) are respectively mounted in a setting recess (313).

6. The moment and magnet detecting equipment for an electric bicycle as claimed in
claim 5, wherein
the transmitting plate (11) is pentagonal and has
five comers;
five threaded holes (111) respectively formed through the corners of the transmitting plate (11); and
the transmitting teeth (113) and the driving teeth (213) are respectively implemented with five in amount;
the outer magnets (121) and the inner magnets (241) are respectively implemented with twelve in amount.

## Patentansprüche

1. Moment- und Magneterfassungsausrüstung für ein elektrisches Fahrrad, umfassend einen Übertragungsaufbau (10), einen Antriebsaufbau (20) und einen Befestigungsaufbau (30), wobei:
der Übertragungsaufbau (10) aufweist:
eine Übertragungsplatte (11) mit
einer Anbauseite;
einer Befestigungsseite, welche gegenüber der Anbauseite ist;
einer Mehrzahl von Ecken;
einem Mittelpunkt;
einer Mehrzahl von Gewindebohrungen (111), jeweils durch die Ecken der Übertragungsplatte (11) ausgebildet;
einer Befestigungsvertiefung (112), welche auf der Innenseite und um den Mittelpunkt der Übertragungsplatte (11) ausgebildet ist;
einer Mehrzahl von Zähnen (113), welche radial auf der Innenseite der Übertragungsplatte (11) in der Befestigungsvertiefung (112) ausgebildet sind und in Richtung des Mittelpunkts der Übertragungsplatte (11) vorragen;
und
eine Mittelpunktsbohrung (114), welche durch den Mittelpunkt der Übertragungsplatte (11) ausgebildet ist; und
einen äußeren Ring (12), welcher auf der Innenseite um die Mittelpunktsbohrung (114) angebracht ist und eine Mehrzahl von äußeren Magneten (121) aufweist, die um den äußeren Ring (12) angebracht sind;
der Antriebsaufbau (20) in der Übertragungsplatte (11) angebracht ist, umfassend:
eine Antriebsplatte (21), welche in der Befestigungsvertiefung (112) angebracht ist und aufweist:
eine Innenseite;
eine Außenseite, welche sich gegenüber der Außenseite befindet;
eine äußere Ringkante;
eine Wellenbohrung (211), welche durch die Antriebsplatte ausgebildet ist;
eine Lagernut (212), welche auf der Innenseite der Antriebsplatte (21) um die Wellenbohrung (211) herum ausgebildet ist;
eine Mehrzahl von Antriebszähnen (213), welche radial auf der äußeren Ringkante der Antriebsplatte (21) ausgebildet sind und jeweils den Übertragungszähnen (113) entsprechend angeordnet sind;
ein Lager (22), welches in der Lagernut (212) der Antriebsplatte (21) angebracht ist;
eine Mehrzahl von Federn (23), welche jeweils zwischen den aufeinander abgestimmten Übertragungszähnen (113) und den Antriebszähnen (213) angebracht sind; und einen inneren Ring (24), welcher auf der Innenseite der Antriebsplatte (21) angebracht ist und eine Mehrzahl von inneren Magneten (241) aufweist, die um den inneren Ring (24) angebracht sind;
der Befestigungsaufbau (30) dem Übertragungsaufbau (10) und dem Antriebsaufbau (20) zugewandt ist und aufweist:
eine Befestigungsplatte (31), welche die Befestigungsvertiefung (112) und den äußeren Ring (12) abdeckt und aufweist:
eine Abdeckungsfläche, welche dem Übertragungsaufbau (10) zugewandt ist;
eine Befestigungsfläche, welche gegenüber der Abdeckungsfläche liegt;
eine Durchgangsbohrung (311), welche durch die Befestigungsplatte (31) ausgebildet ist;
ein Befestigungsrohr (312), welches auf der inneren Fläche der Befestigungsplatte (31) ausgebildet ist und
davon um die Durchgangsbohrung (311) herum vorragt und
in die Lagernut (212) eingeschoben wird, um um das Lager (22) herum angebracht zu sein und dieses abzudecken; und
eine Befestigungsvertiefung (314), welche auf der äußeren Fläche der Befestigungsplatte (31) um die Durchgangsbohrung (311) herum ausgebildet ist; und
einen äußeren Magnetsensor (33), welcher in der Abdeckungsfläche der Befestigungsplatte (31) angebracht ist und mit dem äußeren Ring (12) gefluchtet ist und
die äußeren Magneten (121) erfasst; und
einen inneren Magnetsensor (32), welcher in der Abdeckungsfläche der Befestigungsplatte (31) angebracht ist und mit dem inneren Ring (24) gefluchtet ist und die äußeren Magneten (241) erfasst.

2. Moment- und Magneterfassungsausrüstung für ein elektrisches Fahrrad nach Anspruch 1, wobei
jeder übertragende Zahn (113) ein gleiches Intervall zu den benachbarten übertragenden Zähnen (113) aufweist;
die Antriebszähne (213) mit gleichen Intervallen angeordnet sind; und
der Antriebsaufbau (20) des weiteren einen Abdeckungsring (25) aufweist, welcher auf der inneren Fläche der Antriebsplatte (21) angebracht ist und die Übertragungszähne (113), die Antriebszähne (213) und die Federn (23) in der Befestigungsvertiefung (112) der Übertragungsplatte (11) abdeckt und hält.

3. Moment- und Magneterfassungsausrüstung für ein elektrisches Fahrrad nach Anspruch 1 oder 2, wobei die Mittelpunktsbohrung (114) rund ist; und
der Zylinder (214) von der äußeren Fläche der Antriebsplatte (21) vorragt und drehbar in die Mittelpunktsbohrung (114) der Übertragungsplatte (11) eingeschoben ist.

4. Moment- und Magneterfassungsausrüstung für ein elektrisches Fahrrad nach Anspruch 3, wobei die äußeren Magnete (121) in Menge und Position den inneren Magneten (241) entsprechen.

5. Moment- und Magneterfassungsausrüstung für ein elektrisches Fahrrad nach Anspruch 4, wobei
der äußere Magnetsensor (33) und der innere Magnetsensor (32) jeweils in einer Einsetzvertiefung (313) angebracht sind.

6. Moment- und Magneterfassungsausrüstung für ein elektrisches Fahrrad nach Anspruch 5, wobei
die Übertragungsplatte (11) regelmäßig fünfeckig ist und aufweist:
fünf Ecken;
fünf Gewindebohrungen (111), welche jeweils durch die Ecken der Übertragungsplatte (11) ausgebildet sind; und wobei
die Übertragungszähne (113) und die Antriebszähne (213) jeweils in der Anzahl von fünf ausgeführt sind; und
die äußeren Magnete (121) und die inneren Magnete (241) jeweils in der Anzahl von zwölf ausgeführt sind.

## Revendications

1. Equipement de détection de couple et d'aimant pour une bicyclette électrique, comprenant un ensemble de transmission (10), un ensemble entraîné (20) et un ensemble de fixation (30) et dans lequel :
l'ensemble de transmission (10) comporte une plaque de transmission (11) ayant
un côté de fixation ;
un côté de montage étant opposé au côté de fixation ;
des coins multiples ;
un centre ;
des trous filetés multiples (111) formés respectivement à travers les coins de la plaque de transmission (11) ;
un évidement de montage (112) formé dans le côté intérieur et autour du centre de la plaque de transmission (11) ;
des dentures de transmission multiples (113) formées radialement sur le côté intérieur de la plaque de transmission (11) dans l'évidement de montage (112) et
dépassant dans la direction du centre de la plaque de transmission (11) ; et
un trou central (114) formé à travers le centre de la plaque de transmission (11) ; et
une boucle extérieure (12) montée dans le côté intérieur autour du trou central (114) et ayant des aimants extérieurs multiples (121) montés autour de la boucle extérieure (12) ;
l'ensemble d'entraînement (20) est monté dans la plaque de transmission (11) et comporte une plaque d'entraînement (21) montée dans l'évidement de montage (112) et ayant un côté intérieur ;
un côté extérieur étant opposé au côté intérieur ;
un bord annulaire extérieur ;
un trou d'axe (211) formé à travers la plaque d'entraînement ;
une gorge de roulement (212) formée dans le côté intérieur de la plaque d'entraînement (21) autour du trou d'axe (211) ;
des denture d'entraînement multiples (213) formées radialement sur et dépassant à partir du bord annulaire extérieur de la plaque d'entraînement (21) et correspondant respectivement à la denture de transmission (113) ;
un roulement (22) monté dans la gorge de roulement (212) de la plaque d'entraînement (21) ;
des ressorts multiples (23) montés respectivement entre la denture de transmission correspondante (113) et la denture d'entraînement (213) ; et
une boucle intérieure (24) montée sur le côté intérieur de la plaque d'entraînement (21) et ayant des aimants intérieurs multiples (241) montés autour de la boucle intérieure (24) ;
l'ensemble de fixation (30) fait face à l'ensemble de transmission (10) et l'ensemble d'entraînement (20) et comporte
une plaque de fixation (31) recouvrant l'évidement de montage (112) et la boucle extérieure (12) et comportant
une surface de couverture faisant face à l'ensemble de transmission (10) ;
une surface de fixation étant opposée à la surface de couverture ;
un alésage traversant (311) formé à travers la plaque de fixation (31) ;
un tube de montage (312) formé sur et dépassant de la surface intérieure de la plaque de fixation (31) autour de l'alésage traversant (311) et inséré dans la gorge de roulement (212) afin de monter autour et recouvrir le roulement (22) ; et
un évidement de fixation (314) formé dans la surface extérieure de la plaque de fixation (31) autour de l'alésage traversant (311) ; et
un capteur magnétique extérieur (33) monté dans la surface de couverture de la plaque de fixation (31) et aligné avec la boucle extérieure (12) et détectant les aimants extérieurs (121) ; et
un capteur magnétique intérieur (32) monté dans la surface de couverture de la plaque de fixation (31) et aligné avec la boucle intérieure (24) et détectant les aimants intérieurs (241).

2. Equipement de détection d'aimant et de couple pour une bicyclette électrique selon la revendication 1, dans lequel
chaque denture de transmission (113) a un intervalle identique avec la denture de transmission adjacente (113) ;
les dentures d'entraînement (213) sont situées à des intervalles identiques ; et
l'ensemble d'entraînement (20) comporte en outre une boucle de couvercle (25) montée sur la surface intérieure de la plaque d'entraînement (21) et recouvrant et maintenant la denture de transmission (113), la denture d'entraînement (213) et les ressorts (23) dans l'évidement de montage (112) de la plaque de transmission (11).

3. Equipement de détection d'aimant et de couple pour une bicyclette électrique selon les revendications 1 ou 2, dans lequel
le trou central (114) est circulaire, et
le cylindre (214) dépasse de la surface extérieure de la plaque d'entraînement (21) et est inséré rotativement dans le trou central (114) de la plaque de transmission (11).

4. Equipement de détection d'aimant et de couple pour une bicyclette électrique selon la revendication 3, dans lequel
les aimants extérieurs (121) sont conformes à et correspondent aux aimants intérieures (241) en quantité et position.

5. Equipement de détection d'aimant et de couple pour une bicyclette électrique selon la revendication 4, dans lequel
le capteur magnétique extérieur (33) et le capteur magnétique intérieur (32) sont respectivement montés dans un évidement de positionnement (313).

6. Equipement de détection d'aimant et de couple pour une bicyclette électrique selon la revendication 5, dans lequel
la plaque de transmission (11) est pentagonale et comporte
cinq coins ;
cinq trous filetés (111) respectivement formés à travers les coins de la plaque de transmission (11) ; et
la denture de transmission (113) et la denture d'entraînement (213) sont respectivement implémentées en quantité de cinq ;
les aimants extérieurs (121) et les aimants intérieurs (241) sont respectivement implémentés en quantité de douze.
